Europäisches Patentamt

(19) European Patent Office

Office européen des brevets

(11) Veröffentlichungsnummer: **0 334 105**
**B1**

(12) **EUROPÄISCHE PATENTSCHRIFT**

(45) Veröffentlichungstag der Patentschrift: 06.02.91

(51) Int. Cl.⁵: **F 16 M 11/04,** A 61 G 15/00

(21) Anmeldenummer: 89104041.2

(22) Anmeldetag: 08.03.89

(54) Schwenkarm für Geräte, insbesondere medizinische.

(30) Priorität: 19.03.88 DE 3809266

(43) Veröffentlichungstag der Anmeldung:
27.09.89 Patentblatt 89/39

(45) Bekanntmachung des Hinweises auf die
Patenterteilung:
06.02.91 Patentblatt 91/06

(84) Benannte Vertragsstaaten:
FR IT SE

(56) Entgegenhaltungen:
EP-A-0 058 540
DE-A-1 466 999
DE-B-2 659 444
DE-U-8 704 632
DE-U-8 806 244
FR-A-1 422 927
US-A-4 082 244

(73) Patentinhaber: MÜHOLOS-WERK ALFRED
MÜLLER GMBH & CO
Hauptstrasse 168 Postfach
D-7532 Niefern-Öschelbronn 1 (DE)

(72) Erfinder: Warga, Ewald
Hegel-Strasse 6
D-7130 Mühlacker 3 (DE)

(74) Vertreter: Wolff, Michael, Dipl.-Phys.
Kirchheimer Strasse 69
D-7000 Stuttgart 75 (DE)

**Beschreibung**

Die Erfindung betrifft einen Geräte-Schwenkarm gemäß Oberbegriff des Anspruches 1.

Bei einem aus der US—A—4 082 244 bekannten Schwenkarm dieser Art sind die beiden Koppeln (40 und 44), die sich in einander ungefähr entgegensetzte Richtungen erstrecken, eventuell gelegentlich parallel und stets nur unvollständig in dem traversen Federgehäuse angeordnet, da sie aus dessen offenen Enden herausragen, welche je mittels zweier paralleler Flachteile (32 bzw. 34), die eine der beiden Koppeln flankieren, verlängert sind. Zwischen je ein Flachteile-Paar greift eine am zugeordneten Lagerstutzen (12 bzw. 14) angeordnete Gabel (76) ein, die mittels einer der beiden Schwenkachsen (38 und 36) einerseits an den zugeordneten Flachteilen (34 bzw. 32) sowie andererseits an der zugeordneten Koppel (44 bzw. 40) angelenkt ist. — Eine seitliche Gehäuseöffnung (72) dient dem Zugriff auf ein Federspannteil (54) und auf eine Arretierschraube (74).

Bei diesem bekannten Schwenkarm ist nicht gewährleistet, daß in dem traversen Federgehäuse (30) vorhandener Staub und Schmiermittel oder Abriebpartikel an den axial äußeren Gelenkstellen der Gehäuseverlängerungen und der beiden Koppeln unter keinen Umständen austreten und beispielsweise eine medizinische Operation nicht gefährdet, die mittels eines Gerätes ausgeführt wird, das an einem der beiden Lagerstutzen des Schwenkarmes für dieses Gerät angeordnet ist.

Der Erfindung liegt daher die Aufgabe zugrunde, einen Schwenkarm für Geräte, insbesondere medizinische, zu schaffen, welcher innerlich staubfrei bleibt und Schmiermittel oder Abriebpartikel von den Gelenkstellen nicht abgeben kann.

Diese Aufgabe ist bei einem Schwenkarm der eingangs genannten Art erfindungsgemäß durch die kennzeichnenden Merkmale des Anspruches 1 gelöst.

Dadurch, daß die beiden Koppeln stets parallel vollständig in dem traversen Federgehäuse angeordnet sind und daß dieses bis auf zwei seitliche Gehäuseöffnungen für den Durchtritt der beiden Lagerbolzen oder -stutzen allseitig geschlossen ist, wird vorteilhafterweise erreicht, daß alle Teile des Schwenkarms, insbesondere seine beweglichen, mit Ausnahme der selbstverständlich aus dem traversen Federgehäuse herausragenden Lagerbolzen oder -stutzen, die aber einfach gegen das Federgehäuse abgedichtet werden, eingekapselt sind, so daß das Herausfallen von Schmiermittel oder Abriebpartikeln ausgeschlossen ist. Das würde auch für Staub gelten, falls dieser überhaupt durch die Kapselung in den Schwenkarm eindringen könnte. Ein besonderer Vorteil des erfindungsgemäßen Schwenkarmes besteht, falls dieser im medizinischen Bereich gebraucht werden soll, darin, daß er bei vollkommener Kapselung flüssigkeitsdicht ist und deshalb sterilisiert werden kann, bevor er zum medizinischen Einsatz kommt.

Eine bevorzugte Ausführungsform des erfindungsgemäßen Schwenkarmes ist wie der bekannte Schwenkarm mit einer Einrichtung zum Einstellen der Vorspannung der Feder versehen, die sich an einem im traversen Federgehäuse in dessen Längsrichtung hin und her verschiebbar gelagerten Spannteil abstützt, so daß das Gewicht des am Schwenkarm angeordneten Gerätes angenähert ausgleichbar ist. Die bevorzugte Ausführungsform zeichnet sich darüber hinaus durch die kennzeichnenden Merkmale des Anspruches 2 aus. Die dadurch charakterisierte Vorspanneinrichtung, deren Stellschraubteil beispielsweise mittels eines besonderen Schraubschlüssels drehbar ist, ermöglicht die vollständige Kapselung des erfindungsgemäßen Schwenkarmes.

Bei der bevorzugten Ausführungsform besitzt deren traverses Federgehäuse wie dasjenige des bekannten Schwenkarmes ein eckiges ringförmiges Profil mit vier rechten Winkeln, welches ebene Führungen bewegter Teile ermöglicht. Die bevorzugte Ausführungsform zeichnet sich darüber hinaus durch die kennzeichnenden Merkmale des Anspruches 3 aus. Die dadurch charakterisierten Längsausnehmungen des Federgehäuses sowie die Lagerung der schwenkbaren Lagerbolzen oder -stutzen gestatten eine Vormontage derselben an den durch die erste Zugstange (Rohr) miteinander verbundenen Koppeln, so daß das vormontierte, gelenkige Gebilde in gestreckter Form in das traverse Federgehäuse hineingeschoben und durch anschließendes Abwinkeln der Lagerbolzen oder -stutzen in eine Gebrauchsform gebracht werden kann, die mittels der beiden Schwenkachsen der Lagerbolzen oder -stutzen festgelegt wird.

Bei der bevorzugten Ausführungsform sind die beiden Enden des traversen Federgehäuses mittels je einer ansteckbaren Kappe und die zwei Gehäuse-Austritte (Längsausnehmungen) der beiden Lagerbolzen oder -stutzen mittels je eines angeklemmten hinterschneidungsfreien Faltenbalges flüssigkeitsdicht verschlossen. Diese zweckmäßige Kapselung ist besonders einfach und ermöglicht die zuvor genannte Vormontage.

Bei der bevorzugten Ausführungsform schließt jeder Faltenbalg zwei der Flachteile ein; außerdem ist er einenends an einem die zugeordnete Längsausnehmung des traversen Federgehäuses umfahrenden Haltering an der Gehäuse-Unterseite sowie andernends am zugeordneten Lagerbolzen oder -stutzen formund/oder kraftschlüssig angebracht. Diese Ausgestalt -ung der Kapselung erlaubt eine einfache Anbringung der beiden Bälge.

Die bevorzugte Ausführungsform ist wie der bekannte Schwenkarm mit einer Einrichtung zum Arretieren oder Bremsen des traversen Federgehäuses versehen, wobei sich der vorgesehene Arretierbolzen kaum zum Bremsen eignet. Die bevorzugte Ausführungsform zeichnet sich darüber hinaus durch die kennzeichnenden Merkmale des Anspruches 6 aus. Die dadurch charakterisierte Brems- oder Arretiereinrichtung besitzt die Eigenschaft, daß ihr Stab stets parallel zur hohlen ersten Zugstange und zu dem koaxialen traversen Federgehäuse verschoben wird.

Im Folgenden ist die Erfindung anhand der durch die Zeichnung beispielhaft dargestellten bevorzugten Ausführungsform des erfindungsgemäßen Schwenkarmes im einzelnen erläutert. Es zeigt:

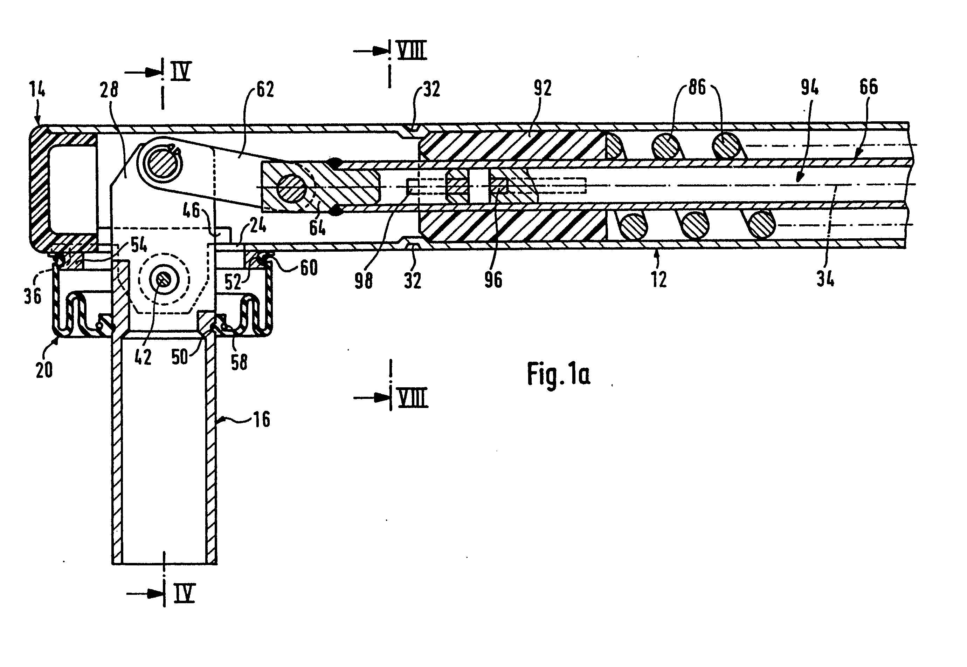

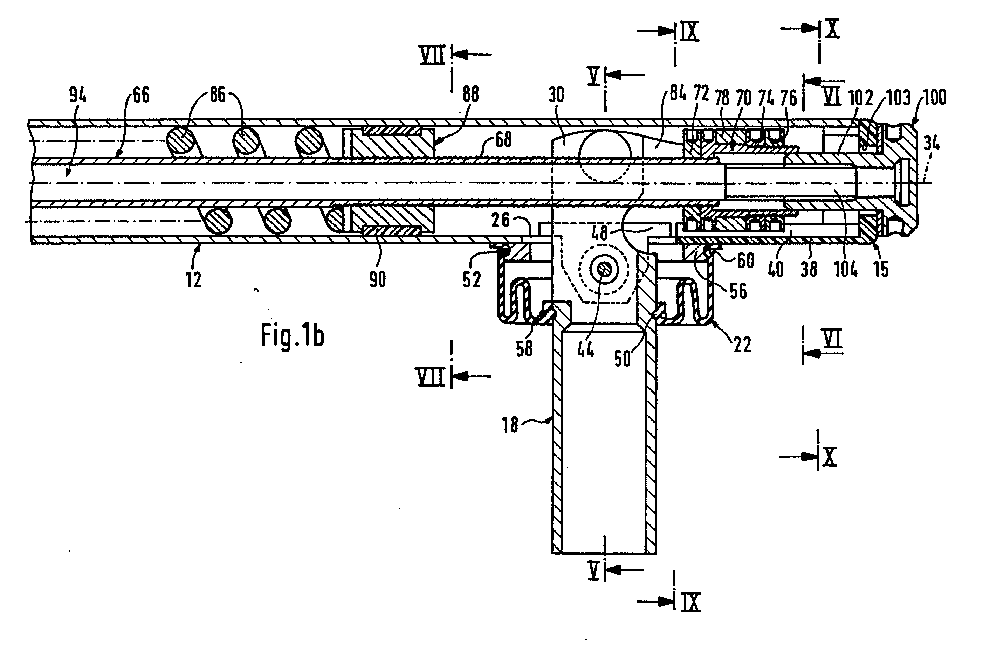

Fig. 1a und b durch eine mittige Unterbrechung getrennte Hälften eines zentralen Vertikalschnittes durch die Ausführungsform;

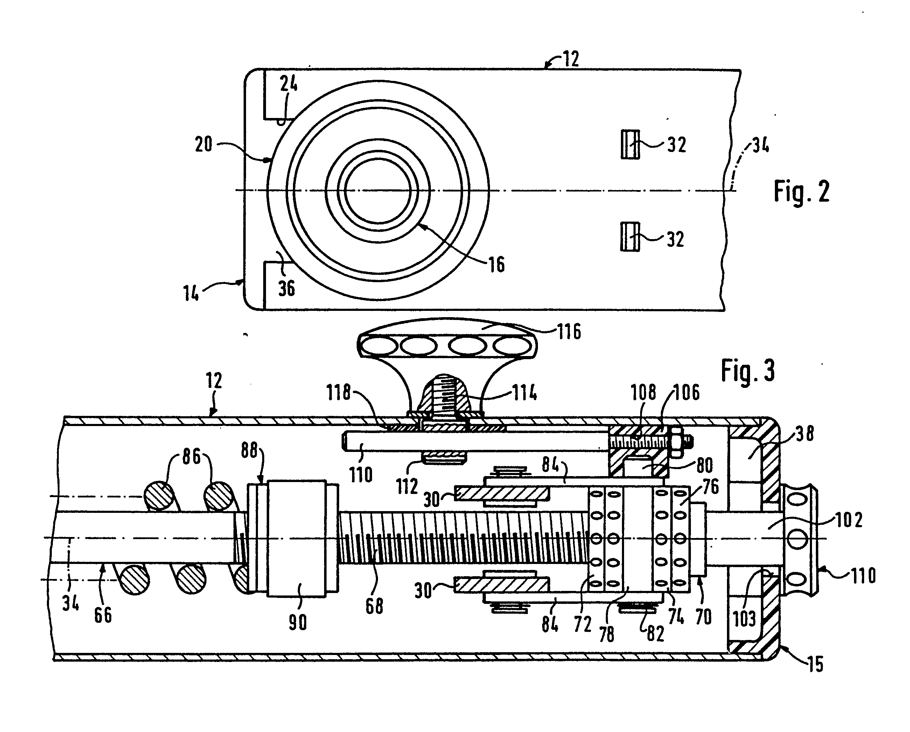

Fig. 2 eine abgebrochene Ansicht in Richtung des Pfeils II in Fig. 1a des dort Dargestellten von unten;

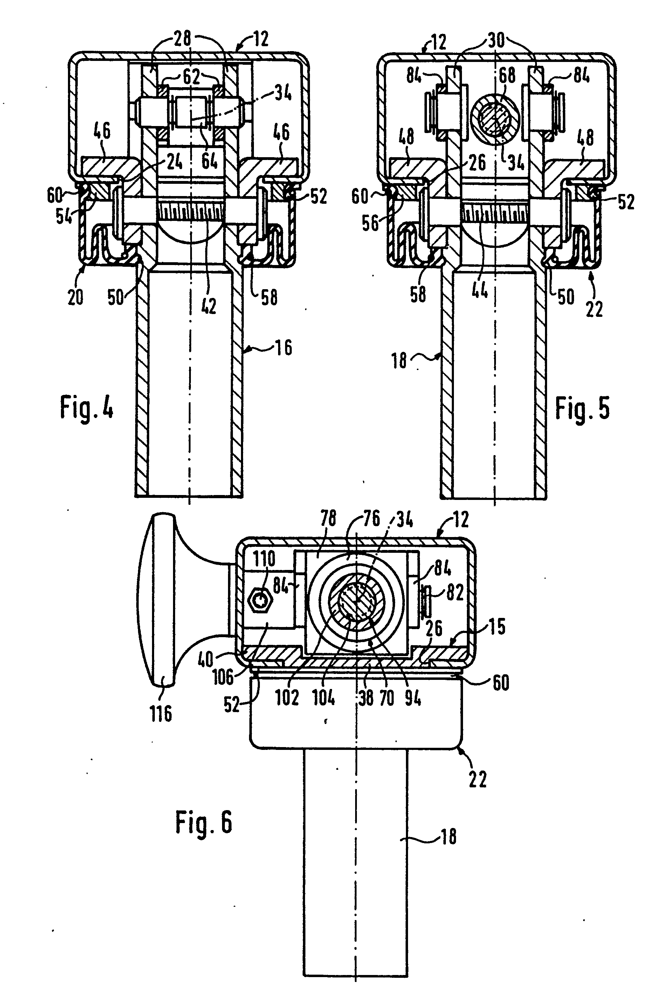

Fig. 3 eine abgebrochene Ansicht des in Fig. 1b Dargestellten ohne die außerhalb des Gehäuses liegenden Teile und dessen Boden von unten;

Fig. 4 und 5 je einen vertikalen Querschnitt nach der Linie IV—IV in Fig. 1a bzw. V—V in Fig. 1b durch die Ausführungsform in einander entgegengesetzten waagrechten Richtungen gesehen;

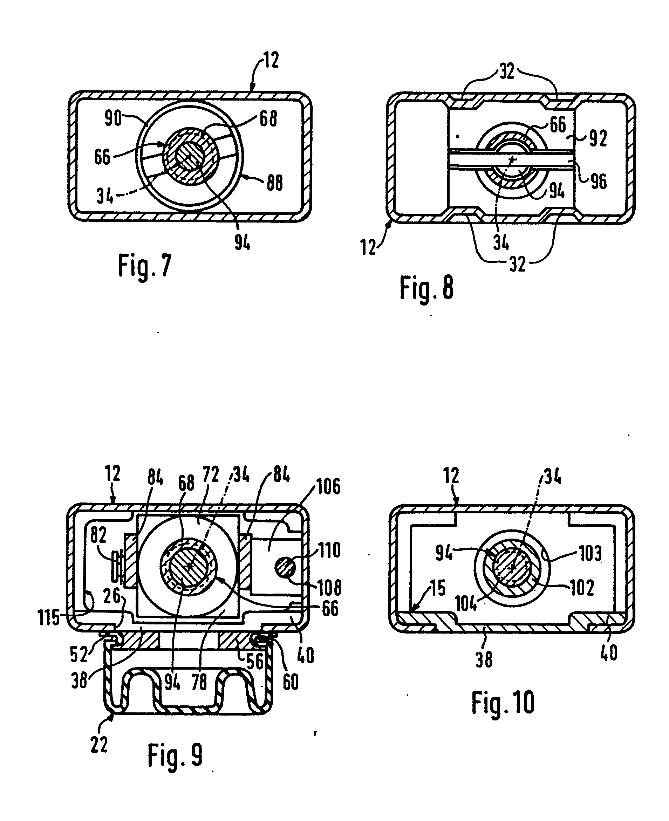

Fig. 6 und 7 je einen vertikalen Querschnitt nach der Linie VI—VI bzw. VII—VII in Fig. 1b durch die Ausführungsform in einer dieser waagrechten Richtungen; sowie

Fig. 8 bis 10 je einen vertikalen Querschnitt nach der Linie VIII—VIII in Fig. 1a bzw. IX—IX bzw. X—X in Fig. 1b durch die Ausführungsform in der entgegengesetzten jener waagrechten Richtungen.

Im Ausführungsbeispiel besteht der erdindungsgemaße Schwenkarm äußerlich hauptsächlich aus einem flachen Vierkantrohr (12), beispielsweise aus Aluminium; aus zwei dessen offene Enden verschließenden Kappen (14 und 15), beispielsweise aus Kunststoff; aus zwei stets parallelen, kreiszylindrischen Lagerstutzen (16 und 18), beispielsweise aus Aluminium, an den Rohrenden sowie aus zwei ringförmigen Faltenbälgen (20 und 22), beispielsweise aus Gummi, an den Rohrenden, von denen jeder das obere Ende eines vertikalen Lagerstutzens (16 bzw. 18) flüssigkeitsdicht umgibt und an der Unterseite des Rohres (12) befestigt ist. Es sei angenommen, daß der eine Stutzen (16) der endseitigen Lagerung des Schwenkarmes an einer ortsfesten Stütze oder einem solchen Träger und der andere Stutzen (18) zur Befestigung eines auf und ab sowie in einer Ebene zu schwenkenden Gerätes am anderen Ende des Schwenkarmes dient.

Das Vierkantrohr (12) weist an seinen beiden Enden unten je eine endseitig offene, rechteckige Längsausnehmung (24 bzw. 26) unterschiedlicher Länge für den Durchtritt einer Verlängerung (28 bzw. 30) des Stutzens (16 bzw. 18) nach oben auf, der dadurch in den Hohlraum des Rohres (12) eingreift. Oben und unten ist das Rohr (12) in der Nähe des Lagerstutzens (16) mit je einem Paar nach innen vorspringender Sicken (32) versehen, die in einer und derselben Querschnittsebene des Rohres (12) angeordnet sind, welche von der zentralen Längsachse (34) des Rohres (12) senkrecht durchstoßen wird. Im übrigen ist das Vierkantrohr (12) völlig glatt.

Die eingesteckte napfförmige Kappe (14) schließt bündig an das durch sie geschlossene Rohrende an und greift unten mit einer Verdikkung (36) in den Endabschnitt der Längsausnehmung (24) ein. Die eingesteckte napfförmige Kappe (15) schließt bündig an das von ihr geschlossene Ende des Rohres (12) an und schließt den Endabschnitt der längeren Längsausnehmung (24) mittels eines großflächigen Vorsprungs (38) nach unten, der an ihr und einer nur unten vorhandenen Verlängerung (40) ausgebildet ist.

Die durch das Vierkantrohr (12) als Traverse miteinander verbundenen beiden Lagerstutzen (16 und 18) sind an ihren oberen Enden inner- und außerhalb des Rohres mit den Verlängerungen (28 bzw. 30) versehen, bei denen es sich je um zwei parallele Platten handelt, an denen eine Schwenkachse (42 bzw. 44) drehbar gelagert ist, welche in zwei im wesentlichen L-förmigen, spiegelbildlich angeordneten Flachteilen (46 bzw. 48) ruht, deren waagrechte Schenkel auf den Berandungen der Längsausnehmung (24 bzw. 26) liegen und deren herausragende, achstragende, vertikale Schenkel die parallelen Kanten dieser Ausnehmung flankieren.

Die einander gleichenden Faltenbälge (20 und 22) sind hinterschneidungsfrei hauptsächlich S-förmig profiliert sowie radial innen am Lagerstutzen (16 bzw. 18) und axial oben an der Unterseite des Vierkantrohres (12) dadurch kraft- und formschlüssig angebracht, daß ein Ringwulst (50) in eine entsprechende Ringnut des Lagerstutzens bzw. eine Ringsicke (52) in eine Ringkehle eines Halteringes (54 bzw. 56) eingreift, und daß sowohl die Ringwülste (50) als auch die Ringsicken (52) je mittels eines Drahtringes (58 bzw. 60) radial belastet sind. Die gleich ausgebildeten Halteringe (54 und 56) sind beispielsweise durch Kleben an der Unterseite des Vierkantrohres (12) befestigt und haben einen Innendurchmesser, der so groß ist, daß er den größten Teil der Längsausnehmung (24) bis auf dessen von der Kappe (14) ausgefüllten Endabschnitt und ungefähr die innere Hälfte der Längsausnehmung (26) umfährt, deren äußere Hälfte vom Vorsprung (38) der Verlängerung (40) der Kappe (15) ausgefüllt ist. An beiden Rohrenden überlagert der Haltering (54 bzw. 56) die Kappe (14 bzw. 15), an der er nicht befestigt ist, sondern lediglich anliegt.

An der plattenförmigen Verlängerung (28) des Lagerstutzens (16) ist ein Paar laschenförmiger erster Koppeln (62) einenends angelenkt, die andernends an einem Stopfen (64) angelenkt sind, welcher in einem Ende der als Rundrohr hohl ausgebildeten ersten Zugstange (66) steckt und mit diesem Stangenende verschweißt ist. Die erste Zugstange (66) ist in dem traversen Vierkantrohr (12) koaxial angeordnet und weist einen stopfenfernen Gewindeendabschnitt (68) auf, dessen freies Ende das freie Ende der Verlängerung (40) der Kappe (15) ein Stück weit überlappt und welches dort eine aufgeschraubte Hülse (70) mit Abschlußflansch trägt, die durch eine Kontermutter (72) gesichert ist. Auf den über den Gewindeendabschnitt (68) axial nach außen vorstehenden Abschnitt der Hülse (70) ist eine Haltemutter (74) mit Kontermutter (76) geschraubt, welche einen am Flansch der Hülse (70) anliegenden Vierkantring (78) festlegen, der ebenfalls auf der Hülse (70) sitzt, wobei deren Flansch, die ihn konternde Mutter (72) sowie die beiden zusammenwirkenden Muttern (74 und 76) einen der äußeren Kantenlänge des Vierkantringes (78) entsprechenden Außendurchmesser aufweisen, der etwas kleiner ist als die vertikal gemessene lichte Höhe des Vierkantrohres (12). Damit sich der Vierkantring (78) nicht um die Längsachse der ersten Zugstange (66) auf der zylindrischen Hülse (70) drehen kann, ist deren Mittelabschnitt zwischen ihrem Flansch und der Haltemutter (74) äußerlich quadratisch profiliert; eine kreisrunde Profilierung und eine entsprechende Innengestalt des jedenfalls äußerlich vierkantigen Ringes (78) sind aber möglich.

Seitlich trägt der Vierkantring (78) die zwei kreiszylindrischen Stummel (80 und 82) einer durch diesen Ring unterbrochenen, waagrechten Gelenkachse, welche die erste Zugstange (66) mathematisch schneidet und mit ihren beiden Stummeln ein Paar laschenförmiger zweiter Koppeln (84) einenends anlenkt, die andernends an der Verlängerung (30) des Lagerstutzens (18) angelenkt sind, wobei diese zweiten Koppeln und die ersten Koppeln (62) stets parallel angeordnet sind, sodaß bei vertikaler Anordnung des Lagerstutzens (16) eine Schwenkung des traversen Vierkantrohres (12) um die waagrechte Schwenkachse (42) dieses Stutzens immer dazu führt, daß der andere Lagerstutzen (18), unabhängig von seiner Bewegung auf einem Kreisbogen um die Längsachse des Lagerstutzens (16), bei diesbezüglich radialer Verlagerung mit seiner Längsachse vertikal angeordnet bleibt.

Zum Gewichtsausgleich des an den Lagerstutzen (18) angeklemmt gedachten medizinischen Gerätes ist eine Druckschraubenfeder (86) vorhanden, die auf der ersten Zugstange (66) sitzt und in das Vierkantrohr (12) paßt, das als Federgehäuse dient. Mit ihrem einen Ende stützt sich die Feder (86) an einem mehr oder weniger auf den Gewindeendabschnitt (68) der ersten Zugstange (66) geschraubten, also stangenfesten, Ringkörper (88) ab, der einen von der Innenseite des Federgehäuses (12) an zwei diametralen Stellen tangierten Gleitring (90) aufweist, der zusammen mit den beiden zweiten Koppeln (84) für die radiale Festlegung der ersten Zugstange (66) in zwei zueinander senkrechten Richtungen im Zusammenwirken mit einem relativ gehäusefesten Spannteil (92) sorgt, an dem sich das andere Ende der Druckschraubenfeder (86) abstützt. Dieses Spannteil (92) ist dazu oben sowie unten eben am Federgehäuse (12) geführt und sitzt verschiebbar auf dem stopfennahen Ende der ersten Zugstange (66). Das Spannteil (92) gehört wie der axial verstellbare Ringkörper (88) zu einer Einrichtung zum Vorspannen der Feder (86) mittels einer in der ersten Zugstange (66) gelagerten und von dieser in Richtung der Längsachse (34) verschieblich geführten zweiten Zugstange (94), die massiv als Stab ausgebildet ist und an ihrem stopfennahen Ende mit einem Zuganker (96) versehen ist, der durch zwei parallele Schlitze (98) in der Wandung des stopfennahen Endes der ersten Zugstange (66) in das Spannteil (92) eingreift, das also durch Verschieben der zweiten Zugstange (94) mitbewegbar ist. Für diese Mitbewegung sorgt ein um die Längsachse (34) drehbares Stellschraubteil (100), das mit einem Flansch an der ebenen Stirnseite der Kappe (15) anliegt und mit einer ein Innengewinde aufweisenden Hülse (102) durch eine zentrale Bohrung (103) der Kappe (15) auf einen Gewindeendabschnitt (104) der zweiten Zugstange (94) geschraubt ist. In der Zeichnung ist die geringste Vorspannung der Feder (86) dargestellt, (wenn man davon absieht, daß der Ringkörper (88) bis zur Stutzenverlängerung (30) zurückgeschraubt sein könnte,) wobei das Spannteil (92) an den als Anschlag dienenden Sicken (32) anliegt und die Hülse (102) ein wenig in die sie führende Hülse (70) eingreift, wenn die parallelen Lagerstutzen (16 und 18) wie gezeichnet rechtwinklig zum Vierkantrohr (12) angeordnet sind. In diesem Zustand des Schwenkarmes soll dieser das am Lagerstutzen (18) angebrachte Gerät gerade ohne Eigenbewegung tragen, wenn die Hülse (102) bis zur Mitte des innerhalb der Hülse (70) liegenden Teiles des Gewindeabschnittes (104) auf diesen geschraubt ist, wobei das Spannteil (92) dann nicht mehr an den Sicken (32) anliegt. Neben dieser Feineinstellung mittels des Stellschraubteiles (100) ist eine Voreinstellung mittels des Ringkörpers (88) möglich, die nach der Endmontage des Schwenkarmes nicht mehr änderbar ist. Die Druckschraubenfeder (86) wird entsprechend dem mittleren Gewicht der anzuhängenden Geräte gewählt.

Eine Brems- oder Arretiereinrichtung (ob arretiert oder nur gebremst wird, hängt vom Kraftaufwand ab) erlaubt es, den nur in einer bestimmten relativen Schwenkstellung der Lagerstutzen (16 und 18) bezüglich des traversen Vierkantrohres (12) exakten Gewichtsausgleich des angehängten Gerätes ohne Betätigung der Federvorspanneinrichtung mehr oder weniger zu kompensieren; diese Einrichtung weist einen an einer Seitenwand des Rohres (12) eben geführten Würfel (106) auf, der auf dem freien Ende des Achsstummels (80) sitzt und eine zur Längsachse (34) parallele Bohrung (108) besitzt, in der ein kreiszylindrischer Stab (110) in seiner Längsrichtung unverschiebbar gelagert ist. Dieser Stab (110) greift verschieblich in ein durchbohrtes Einrichtungsteil (112) ein, das drehfest in die Wandung des Vierkantrohres (12) von innen her eingelassen und mit einem nach außen ragenden Gewindestift (114) versehen ist, längs dessen Achse das Einrichtungsteil (112) ein wenig verschiebbar am Rohr (12) gelagert ist. Auf den Gewindestift (114) ist ein außerhalb des Vierkantrohres (12) greifbarer, handradähnlicher Drehknopf (116) mit Innengewinde geschraubt, welcher drehbar, aber axial unverschiebbar am Rohr (12) gelagert ist, das zusammen mit dem innenliegenden Stab (110) eine Haftreibung erzeugende Ringscheibe (118) einklemmt, und zwar umso mehr, je fester der Stab (110) durch Drehung des Knopfes (116) gegen die Wandung des Federgehäuses (12) gezogen worden ist. Diese Ringscheibe (118) sitzt auf dem Teil (112) der Brems- oder Arretiereinrichtung.

**Patentansprüche**

· 1. Schwenkarm zur endseitigen Lagerung an einer ortsfesten Stütze oder einem solchen Träger bzw. zur Befestigung eines auf und ab sowie in einer Ebene zu schwenkenden, insbesondere medizinischen, Gerätes; mit zwei stets parallelen Lagerbolzen oder -stützen (16 und 18), die durch eine einzige hohle, am Umfang hauptsächlich geschlossene, hauptsächlich zylindrische Traverse (Vierkantrohr 12), die an beiden Bolzen oder Stutzen (16 und 18) mittels paralleler Schwenkachsen (42 bzw. 44) angelenkt ist, miteinander verbunden sind; mit der Traverse als Federgehäuse (Vierkantrohr 12), in dem eine, eine mittelbar (Spannteil 92) am Federgehäuse abgestützte Druckschraubenfeder (86) und eine stangenfeste Federstütze (Ringkörper 88) aufnehmende Zugstange (66) koaxial angeordnet ist, welche an ihren zwei Enden (Stopfen 64 und Gewindeabschnitt 68) innerhalb des traversen Federgehäuses (12) mittels je einer Koppel (62 und 84) an einen der beiden Lagerbolzen oder -stutzen (Verlängerung 28 bzw. 30) angelenkt ist, dadurch gekennzeichnet, daß die beiden Koppeln (62 und 84) stets parallel vollständig in dem traversen Federgehäuse (Vierkantrohr 12) angeordnet sind und daß dieses bis auf zwei seitliche Gehäuseöffnungen (Längsausnehmungen 24 und 26) für den Durchtritt der beiden Lagerbolzen oder -stutzen (16, 28 bzw. 18, 30) allseitig geschlossen ist.

2. Schwenkarm nach Anspruch 1, mit einer Einrichtung zum Einstellen der Vorspannung der Feder (86), die sich an einem im traversen Federgehäuse (Vierkantrohr 12) in dessen Längsrichtung (Längsachse 34) hin und her verschiebbar gelagerten Spannteil (92) abstützt, dadurch gekennzeichnet, daß das relativ gehäusefeste Spannteil (92) mittels einer zweiten Zugstange (94) in der hohl ausgebildeten ersten Zugstange (66) relativ zum Gehäuse bewegbar ist, wozu die radial innere Zugstange (94) an ihrem axial inneren Ende einen Zuganker (96) trägt, der, gegebenenfalls durch (Schlitze 98) die radial äußere Zugstange (66), am Spannteil (92) angreift, und an ihrem axial äußeren Ende (Gewindeendabschnitt 104) ein Gewinde aufweist, das mit einem außerhalb des traversen Federgehäuses (Vierkantrohr 12) drehbar angeordneten, axial festgelegten Stellschraubteil (100) versehen ist; wobei die stangenfeste Federstütze (Ringkörper 88) auf der ersten Zugstange (66) sitzt, gegebenenfalls verstellbar.

3.) Schwenkarm nach Anspruch 1 oder 2, dessen traverses Federgehäuse (12) ein eckiges ringförmiges Profil mit vier rechten Winkeln besitzt, dadurch gekennzeichnet, daß das traverse Federgehäuse (Vierkantrohr 12) an seinen zwei Enden unten je eine endseitig offene Längsausnehmung (24 bzw. 26) als Gehäuseöffnung für den Durchtritt eines Lagerbolzens oder -stutzens (16 bzw. 18) aufweist; und daß die zwei Schwenkachsen (42 und 44) für die beiden Bolzen oder Stutzen (16 und 18) außerhalb des traversen Federgehäuses (Vierkantrohr 12) mittels die Längsausnehmungen (24 und 26) flankierender Flachteile (46 bzw. 48) an diesem Gehäuse (Vierkantrohr 12) gelagert sind.

4. Schwenkarm nach einem der Ansprüche 1 bis 3, dadurch gekennzeichnet, daß die beiden Enden des traversen Federgehäuses (Vierkantrohr 12) mittels je einer ansteckbaren Kappe (14 bzw. 15) und die zwei GehäuseAustritte (Längsausnehmungen 24 und 26) der beiden Lagerbolzen oder -stutzen (16 und 18) mittels je eines angeklemmten hinterschneidungsfreien Faltenbalges (20 bzw. 22) flüssigkeitsdicht verschlossen sind.

5. Schwenkarm nach Anspruch 4 mit 3, dadurch gekennzeichnet, daß jeder Faltenbalg (20 bzw. 22) zwei der Flachteile (46 bzw. 48) einschließt und einenends an einem die zugeordnete Längsausnehmung (24 bzw. 26) des traversen Federgehäuses (Vierkantrohr 12) umfahrenden Haltering (54 bzw. 56) an der Gehäuse-Unterseite sowie andernends am zugeordneten Lagerbolzen oder -stutzen (16 bzw. 18) form- und/oder kraftschlüssig angebracht ist.

6. Schwenkarm nach einem der Ansprüche 1 bis 5, mit einer Einrichtung zum Arretieren oder Bremsen des traversen Federgehäuses (Vierkantrohr 12), gekennzeichnet durch einen gelenkig mit einem (18) der Lagerbolzen oder -stutzen verbundenen Stab (110) und ein diesen in dessen Längsrichtung führendes durchbohrtes Einrichtungsteil (112), das an einem axial verschiebbar, drehfest am Federgehäuse (12) gelagerten Gewindestift (114) befestigt ist, der mit einem axial unverschiebbar, drehbar am Federgehäuse (12) gelagerten Drehknopf (116) mit Innengewinde verschraubt ist; und dadurch, daß der Stab (110) an einer Gelenkachse (Stummel 80 und 82) zur Verbindung einer (84) der beiden Koppeln mit der hohlen ersten Zugstange (66) befestigt ist.

**Revendications**

1. Bras orientable pour le montage sur un montant fixe ou sur un support analogue et respectivement pour la fixation d'un appareil, notamment médical, devant être déplacé vers le haut et vers le bas ainsi que dans un plan, comprenant deux boulons ou tubulures de support (16 et 18) toujours parallèles qui sont reliés entre eux par une seule traverse creuse essentiellement fermée sur la périphérie et essentiellement cylindrique (tube carré 12) articulée sur les deux boulons ou tubulures (16 et 18) au moyen d'axes de pivotement parallèles (42 et respectivement 44), avec la traverse (tube carré 12) comme barillet dans lequel est disposée coaxialement une barre de traction (66) recevant un ressort cylindrique de compression (86) s'appuyant indirectement (élément de tension 92) sur le barillet, et un support de ressort (corps annulaire 88) solidaire de la barre, laquelle barre de traction est articulée avec ses deux extrémités (bouchon 64 et section filetée 68) à l'intérieur du barillet transversal (12) sur l'un des deux boulons ou tubulures de support (prolongement 28 et respectivement 30) au moyen de respectivement une bielle (62 et 84), caractérisé en ce que les deux bielles (62 et 84) sont toujours disposées parallèlement et entièrement dans le barillet transversal (tube carré 12) et que celui-ci est fermé de toute part à l'exception de deux ouvertures latérales (évidements longitudinaux 24 et 26) pour le passage des deux boulons ou tubulures de support (16, 28 et respectivement 18, 30).

2. Bras orientable selon la revendication 1, comprenant un dispositif pour le réglage de la tension préliminaire du ressort (86) qui prend appui sur un élément de tension (92) monté dans le barillet transversal (tube carré 12) de façon à pouvoir être déplacé dans les deux sens dans la direction longitudinale (axe longitudinal 34) de celui-ci, caractérisé en ce que l'élément de tension (92) relativement solidaire du barillet peut être déplacé dans la première barre de traction creuse (66) par rapport audit barillet au moyen d'une seconde barre de traction (94), la barre de traction (94) radialement intérieure portant, à cet effet, sur son extrémité axialement intérieure un tirant d'ancrage (96) qui agit, le cas échéant par la barre de traction radialement extérieure (66) (fentes 98), sur l'élément de tension (92) et comprend à son extrémité axialement extérieure (section terminale filetée 104) un filetage qui est muni d'un élément de vis de réglage (100) disposé de manière tournante à l'extérieur du barillet transversal (tube carré 12) et immobilisé dans le sens axial, le support de ressort solidaire de la barre (corps annulaire 88) étant monté, éventuellement de manière réglable, sur la première barre de traction (66).

3. Bras orientable selon l'une des revendications 1 ou 2, dont le barillet (12) présente un profil annulaire à quatre angles droits, caractérisé en ce que le barillet transversal (tube carré 12) comprend à chacune de ses deux extrémités, en bas, un évidement longitudinal (24 et respectivement 26) ouvert à l'extrémité qui sert d'ouverture pour le passage d'un boulon ou d'une tubulure de support (16 et respectivement 18); et que les deux axes de pivotement (42 et 44) pour les deux boulons ou tubulures (16 et 18) sont disposés à l'extérieur du barillet transversal (tube carré 12) et montés sur ledit barillet (tube carré 12) au moyen d'éléments plats (46 et respectivement 48) qui flanquent les évidements longitudinaux (24 et 26).

4. Bras orientable selon l'une des revendications 1 à 3, caractérisé en ce que chacune des deux extrémités du barillet transversal (tube carré 12) est obturée au moyen d'un capuchon emboîtable (14 et respectivement 15) et que les deux sorties du barillet (évidements longitudinaux 24 et 26) des deux boulons ou tubulures de support (16 et 18) sont fermées chacune de manière étanche aux liquides par un soufflet (20 et respectivement 22) fixé sans contre-dépouille.

5. Bras orientable selon les revendications 4 et 3, caractérisé en ce que chaque soufflet (20 et respectivement 22) renferme deux éléments plats (46 et respectivement 48) et est monté à engagement positif et/ou par adhérence, d'un côté sur une bague de retenue (54 et respectivement 56) à la face inférieure du barillet qui fait le tour de l'évidement longitudinal associé (24 et respectivement 26) du barillet transversal (tube carré 12) et de l'autre côté sur le boulon ou la tubulure de support associé (16 et respectivement 18).

6. Bras orientable selon l'une des revendications 1 à 5, avec un dispositif pour le blocage ou le freinage du barillet transversal (tube carré 12), caractérisé en ce qu'il comprend une barre (110) articulée avec l'un (18) des boulons ou tubulures et un élément alésé (112) du dispositif dans lequel ladite barre est guidée dans sa direction longitudinale et qui est fixé sur une tige filetée (114) montée de manière axialement mobile et rigide en rotation sur le barillet (12), laquelle tige est vissée sur un bouton tournant (116) avec filetage intérieur monté de manière axialement immobile et tournante sur le barillet (12); et que la barre (110) est fixée sur un axe d'articulation (tourillon 80 et 82) pour rattacher l'une (84) des deux bielles à la première barre de traction creuse (66).

## Claims

1. Swivel arm for mounting at the end on a fixed support or the like and for attaching an apparatus, in particular a medical apparatus, which is to be rocked up and down as well as in a plane; comprising two always parallel mounting columns or supports (16 and 18) which are joined together by a single hollow, mainly cylindrical cross arm (rectangular tube 12) which is substantially closed on its external surface and which is pivoted to both columns or supports (16 and 18) by means of parallel pivot pins (42 and 44); the cross arm serving as spring housing (rectangular tube 12) in which a connecting rod (66) carrying a helical compression spring (86) indirectly supported (clamping member 92) against the spring housing and a spring support (annular member 88) fixed to the rod is arranged coaxially, which connecting rod is pivoted at each end (plug 64 and threaded section 68) within the transverse spring housing (12) to one of the two mounting columns or supports (extension 28 or 30), in each case by means of a coupler (62 and 84), characterised in that the two couplers (62 and 84) are always arranged parallel to one another and completely within the transverse spring housing (rectangular tube 12) and in that the said spring housing is closed on all sides except for two lateral housing openings (longitudinal recesses 24 and 26) for the passage of the two mounting columns or supports (16, 28 and 18, 30).

2. Swivel arm according to claim 1 having a device for adjustment of the bias tension of the spring (86) which bears against a clamping member (92) inside the transverse spring housing, which clamping member is mounted to be reciprocally displaceable in the longitudinal direction of the spring housing (longitudinal axis 34), characterised in that the clamping member (92) relatively fixed to the housing is displaceable relatively to the housing by means of a second connecting rod (94) inside the hollow first connecting rod (66), for which purpose the radially inner connecting rod (94) carries a tie rod (96) at is axially inner end, which tie rod acts on the outer connecting rod (66) at the clamping part (92), optionally through slots (98), and has a screw thread at its axially outer end (threaded section 104), which thread is equipped with an axially fixed adjustment screw member (100) rotatably arranged outside the transverse spring housing (rectangular tube 12); the spring support (annular member 88) which is fixed to the rod being seated on the first connecting rod (66), optionally adjustably.

3. Swivel arm according to claim 1 or claim 2, whose transverse spring housing (12) has an angular ring-shaped section with four right angles, characterised in that the transverse spring housing (rectangular tube 12) has a longitudinal recess (24 and 26) on the underside at each of its two ends to serve as opening in the housing for the passage of a mounting column or support (16 and 18); and in that the two swivel pins (42 and 44) for the two mounting columns or supports (16 and 18) are mounted on the outside of the transverse spring housing (rectangular tube 12) by means of flat members (46 and 48) which flank the longitudinal recesses (24 and 26).

4. Swivel arm according to one of the claims 1 to 3, characterised in that the two ends of the transverse spring housing (rectangular tube 12) are each sealed liquid tightly by means of an attachable cap (14 or 15) and the two housing outlets (longitudinal recesses 24 and 26) of the two mounting columns or supports (16 and 18) are each sealed liquid tightly by means of bellows (20 and 22, respectively) which are free from undercuts.

5. Swivel arm according to claim 4 with 3, characterised in that each bellows (20 and 22) encloses two of the flat members (46 and 48) and is attached in a form locking or force locking manner at one of its ends to a support ring (54 or 56) surrounding the associated longitudinal recess (24 or 26) of the transverse spring housing (rectangular tube 12) on the underside of the housing and at its other end to the associated mounting column or support (16 or 18).

6. Swivel arm according to one of the claims 1 to 5, comprising a device for stopping or braking the transverse spring housing (rectangular tube 12), characterised by a rod (110) pivotally connected to one (18) of the mounting columns or supports and a perforated device (112) which guides the said rod in its longitudinal direction and which is attached to an axially displaceable threaded pin (114) mounted to be fixed in its rotation to the spring housing (12), which threaded pin (114) is screwed to an internally threaded turning knob (116) which is axially non-displaceable and rotatably mounted on the spring housing (12) and in that the rod (110) is fixed to a pivot shaft (stump 80 and 82) for connecting one (84) of the two couplers to the hollow first connecting rod (66).

Fig.1a

EP 0 334 105 B1

Fig.1b

Fig. 2

Fig. 3

3

Fig. 4

Fig. 5

Fig. 6

**Fig. 7**

**Fig. 8**

**Fig. 9**

**Fig. 10**